# EUROPEAN PATENT APPLICATION

(11) **EP 4 445 975 A1**
(43) Date of publication of application: **16.10.2024**
(21) Application number: 22920599.2
(22) Date of filing: 22.12.2022
(51) Int. Cl.: A63F 13/58, A63F 13/215, A63F 13/424, A63F 13/53

(54) **GAME DEVICE, GAME ENVIRONMENT SETTING METHOD, AND PROGRAM**

(30) Priority: 13.01.2022 JP 2022003574
(71) Applicant: Tomy Company, Ltd., Katsushika-ku Tokyo 124-8511 (JP)
(72) Inventor: KATO, Kunihiko, Tokyo 124-8511 (JP); KASHIWAZAKI, Kazuhiko, Tokyo 124-8511 (JP); UNAKAMI, Takanobu, Tokyo 124-8511 (JP); UESHIMA, Hiromu, Kyoto-shi, Kyoto 600-8815 (JP)
(74) Representative: Dr. Gassner & Partner mbB
(86) International application number: PCT/JP2022/047382
(87) International publication number: WO 2023/136082

(57) **Abstract**

A game device, game environment setting method and program are provided. The game device (10) has a CPU (11) that acquires voice via a voice input unit (15). The CPU (11) of the game device (10) also extracts feature data about said voice on the basis of the acquired voice. Further, on the basis of the extracted feature data, the CPU (11) of the game device (10) sets characteristics (offensive ability, defensive ability, speed) for a prescribed character, as part of the environment of a game.

## Description

### Field of the Invention

The present disclosure relates to a game device, a game environment setting method and a program.

### Background of the Invention

Conventionally, game devices were known that could set a game environment based on voice, etc., inputted by a player. For example, in Patent Document 1, disclosed is a game device that makes a specific character corresponding to an inputted sound or voice appear on a display screen according to the sound or voice inputted by a player. In Patent Document 2, disclosed is a game system that compares the voice inputted by the player with voices associated with game operations and stored in advance, and activates operations with different effects within the game depending on the comparison result.

### Prior Art Documents

### Patent Documents

Patent Document 1: Patent Publication No. 3996174
Patent Document 2: Unexamined Patent Publication No. 2020-103790

### Summary of the Invention

### Problems the Invention Is Intended to Solve

However, in the game device disclosed in Patent Document 1 and the game system disclosed in Patent Document 2, the abovementioned character, etc., is made to appear using so-called pattern matching in which features of the voice inputted by the player are compared with voice feature information stored in a database in advance, so if the conditions when the player inputs the voice are the same (e.g. the same dialogue), it is likely that a character, etc., with the same parameters will appear, which has the problem of being uninteresting. There is also the problem that when the inputted voice does not match the voice feature information stored in the database, the abovementioned character, etc., cannot be made to appear.

In consideration of the kinds of problems noted above, the purpose of the present disclosure is to provide a game device, a game environment setting method and a program capable of setting a wide variety of game environments when setting a game environment, and of reliably setting those environments.

### Means for Solving the Problems

A game device of claim 1 is a game device comprising
an acquisition means for acquiring voice,
an extraction means for extracting feature data related to that voice based on the voice acquired by the acquisition means, and
a setting means for setting a game environment based on the feature data extracted by the extraction means.

Claim 2 is the game device according to claim 1, comprising
digitization means for digitizing feature data extracted by the extraction means, wherein
the setting means sets the game environment based on the feature data digitized by the digitization means.

Claim 3 is the game device according to claim 2, wherein
the digitization means digitizes into a plurality of numerical values based on the feature data.

Claim 4 is the game device according to claim 2 or 3, wherein
the extraction means divides a frequency spectrum obtained from waveform data of the voice acquired by the acquisition means into a plurality of frequency domains, and extracts the area under the spectrum in each divided frequency domain as the feature data.

Claim 5 is the game device according to claim 4, wherein
the digitization means digitizes the feature data by converting the area of each of the frequency domains into a prescribed integer corresponding to an applicable predetermined range corresponding to each of the area.

Claim 6 is the game device according to claim 5, comprising
a conversion means for converting each integer of the feature data digitized by the digitization means into binary data, and
a generating means for allocating each binary data converted by the conversion means to a pre-specified group among a plurality of groups, and generating a plurality of parameters corresponding to each group based on the binary data configured by being allocated to each group, wherein
the setting means sets a plurality of characteristics of a character used in the game as an environment of the game based on the plurality of parameters generated by the generating means.

Claim 7 is the game device according to claim 6, comprising
a display control means for displaying on a display unit the plurality of characteristics of the character set by the setting means.

Claim 8 is the game device according to claim 6 or 7, comprising
change means for changing the lineup of the integers of the feature data digitized by the digitization means, wherein
when the lineup of the integers is changed by the change means, the conversion means converts each of the integers of the feature data to binary data based on the feature data after the lineup of the integers has been changed.

Claim 9 is the game device according to claim 8, wherein
each frequency of the frequency spectrum is associated with an array for changing the lineup of the integers,
the extraction means further extracts the frequency having the maximum gain in the frequency spectrum as the feature data, and
the change means changes the lineup of the integers based on the array corresponding to the frequency extracted by the extraction means.

A game environment setting method according to claim 10 is a game environment setting method comprising
an acquisition step for acquiring voice,
an extraction step for extracting feature data related to the voice based on the voice acquired in the acquisition step, and
a setting step for setting the game environment based on the feature data extracted in the extraction step.

A program according to claim 11 is a program that
makes a computer function as
an acquisition means for acquiring voice,
an extraction means for extracting feature data related to the voice based on the voice acquired by the acquisition means, and
a setting means for setting the game environment based on the feature data extracted by the extraction means.

### Effect of the Invention

According to the present disclosure, it is possible to set a wide variety of game environments when setting a game environment, and to reliably set those environments.

### Brief Description of the Drawings

FIG. 1 is a drawing showing an example of the external appearance of a game device.
FIG. 2 is a block diagram showing an example of the functional constitution of the game device.
FIG. 3 is a flow chart showing the flow of the character generating process.
FIG. 4 is a drawing showing an example of a recording mode screen.
FIG. 5 is a drawing showing the area of each section when the frequency spectrum obtained from voice data is divided into four equal parts.
FIG. 6 is a drawing showing an example of a conversion table used when converting the value of the area of each section of the frequency spectrum obtained from the voice data to an integer of 0 to 3.
FIG. 7 is a drawing showing the generating means of the three parameters of offensive power, defensive power, and speed.
FIG. 8 is a drawing showing an example of a character generating screen.

### Detailed Description of the Embodiments

Hereafter, the game device to which the present disclosure is applied is explained in detail while referring to figures.

### [External Appearance]

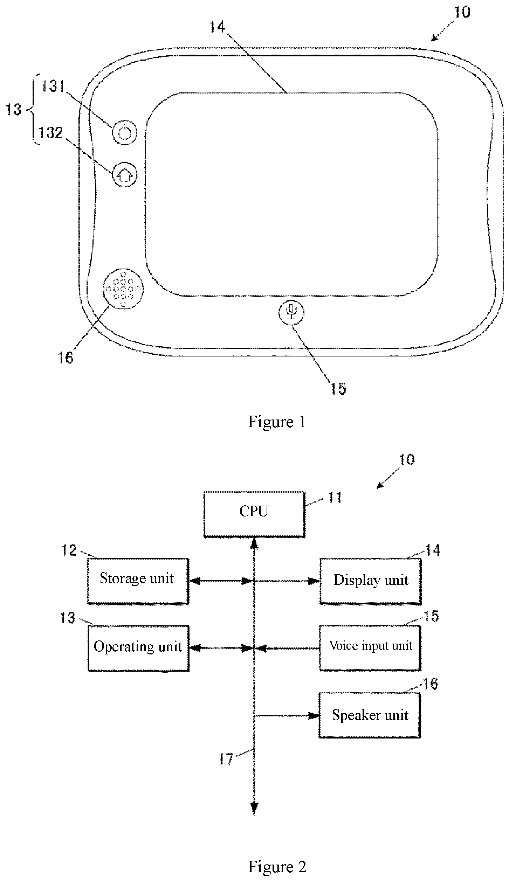

FIG. 1 is a drawing showing an example of the external appearance of a game device 10.

As shown in FIG. 1, the game device 10 is a tablet type terminal device that comprises a display unit 14 and a voice input unit 15, etc., and based on voice data inputted from the voice input unit 15, sets characteristics (offensive power, defensive power, speed) of a prescribed character (e.g. the main character of the game performed on the game device 10), and controls the display of the character characteristics that have been set on the display unit 14. A player of this game device 10 uses the character for which the abovementioned characteristics have been set to enjoy a battle game on a computer with another player.

### [Functional Constitution]

FIG. 2 is a block diagram showing an example of the functional constitution of the game device 10.

As shown in FIG. 2, the game device 10 comprises a CPU (Central Processing Unit) 11, a storage unit 12, an operating unit 13, a display unit 14, a voice input unit 15, a speaker unit 16, and a bus 17. Each part of the game device 10 is connected via the bus 17.

The CPU 11 is a processor for controlling each part of the game device 10. The CPU 11 reads a specified program among a system program and application programs stored in the ROM (Read Only Memory) of the storage unit 12 and executes various processes according to the program on the ROM. The CPU 11 may also expand the specified program in the RAM (Random Access Memory) of the storage unit 12.

The storage unit 12 comprises a storage device used as a temporary storage region for RAM (Random Access Memory), etc., and at least one memory (e.g. ROM or storage memory) for storing programs and data. As the program stored in the storage unit12, examples include a system program for having the CPU 11 comprehensively control the game device 10, or a game program needed for executing a game.

The operating unit 13 is configured having a power button 131 and a home button 132 provided around the display unit 14 of the game device 10 body, and a touch sensor, etc., (not illustrated) provided on the display unit 14, receives an input operation from the player, and outputs that operation information to the CPU 11.

The display unit 14 is constituted by an LCD (Liquid Crystal Display), an EL (Electro Luminescence) display, etc., and performs various displays according to display information instructed from the CPU 11. The display unit 14 may be integrated with the game device 10 or may also be realized by a television or other display device separate from the game device 10.

The voice input unit 15 is configured having a microphone, an AD converter, etc., receives voice input of the player, etc. from the microphone during voice input, converts the inputted voice to digital voice data, and outputs that to the CPU 11.

The speaker unit 16 is configured having a DA converter, an amplifier, a speaker, etc., converts digital audio signals to analog audio signals during sound output, and outputs that from the speaker.

### [Process Flow]

Next, the character generating process performed by the game device 10 of the present embodiment is explained.

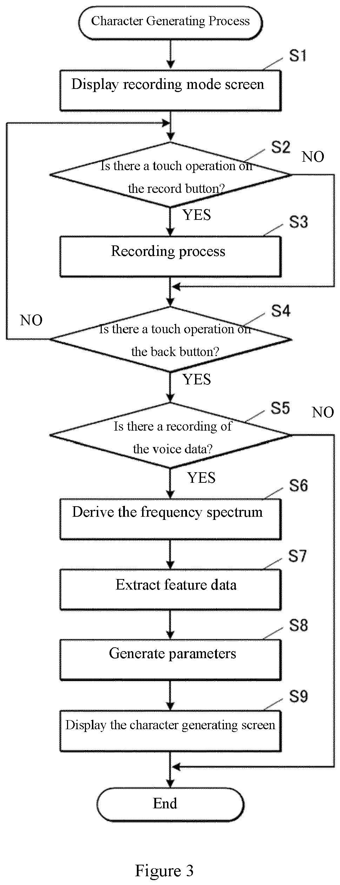

FIG. 3 is a flow chart showing the flow of the character generating process. The character generating process explained here is a process that is started when a prescribed operation is done to display a recording mode screen 31 (described later) on the display unit 14 via the operating unit 13.

As shown in FIG. 3, when the character generating process starts, first, the CPU 11 of the game device 10 displays the recording mode screen 31 on the display unit 14 (step S1).

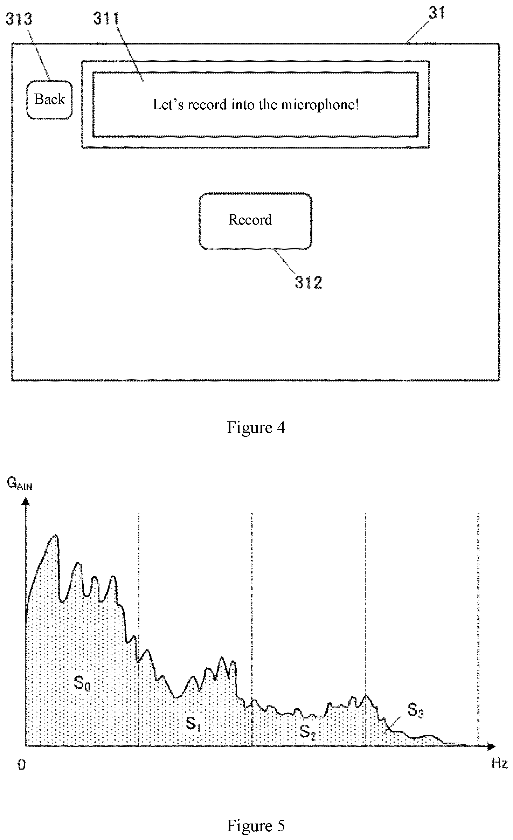

FIG. 4 is a drawing showing an example of the recording mode screen 31.

As shown in FIG. 4, on the recording mode screen 31, the message information 311 "Let's record into the microphone!" is displayed. A record button 312 and a back button 313 are also displayed on the recording mode screen 31. The record button 312 is a button for starting the recording process (described later). The back button 313 is a button for displaying on the display unit 14 a prescribed screen (not illustrated) before transitioning to the recording mode screen 31.

Returning to the explanation of the character generating process, the CPU 11 determines whether a touch operation has been done on the record button 312 via the operating unit 13 (step S2).

In step S2, when it is determined that the touch operation has not been done on the record button 312 via the operating unit 13 (step S2, No), the CPU 11 skips step S3, and the process advances to step S4.

In step S2, when it is determined that the touch operation has been done on the record button 312 via the operation unit 13 (step S2, Yes), the CPU 11 performs the recording process via the voice input unit 15 for a prescribed time (e.g. 2 seconds) (step S3). Here, by the recording process being performed, voice data of the player, etc., is acquired and is temporarily stored in the RAM of the storage unit 12. Then, the CPU 11 advances the process to step S4. In the recording process of step S3, it is assumed that the player is allowed to say any word (e.g. "Summon," "Monster name," etc.). At this time, it is also possible to have a nearby person (friend, family, etc.) say any word on behalf of the player.

Subsequently, the CPU 11 determines whether the touch operation has been done on the back button 313 via the operating unit 13 (step S4).

In step S4, when it is determined that the touch operation has not been done on the back button 313 via the operating unit 13 (step S4, No), the CPU 11 returns the process to step S2, and repeats the process thereafter.

In step S4, when it is determined that the touch operation was done on the back button 313 via the operating unit 13 (step S4, Yes), the CPU 11 determines whether there is a recording of the voice data (recording data) in the RAM of the storage unit 12 (step S5).

In step S5, when it is determined that there is a recording of the voice data (recording data) in the RAM of the storage unit 12 (step S5, Yes), the CPU 11 performs fast Fourier transform (FFT) on the voice data, and derives a frequency spectrum (step S6). The fast Fourier transform is executed on the voice data while shifting a half frame (256 samples) at a time with 512 samples per frame. In the present embodiment, the number of samples in the voice data is approximately 42,000, so the fast Fourier transform is executed approximately 160 (= 42,000/256) times. In the present embodiment, the voice data is divided into a front half and a latter half of approximately 21,000 samples each, and the frequency spectrum is derived for each of the front half and the latter half of the voice data.

Subsequently, the CPU 11 extracts feature data (voiceprint data) from the frequency spectrum derived in step S6 (step S7). In specific terms, the CPU 11 divides into four equal parts each frequency spectrum derived with the front half and the latter half of the voice data as the object, and derives the areas S₀, S₁, S₂, S₃ of each section (see FIG. 5) as feature data (voiceprint data). The CPU 11 derives the frequency number (0 to 255) that gives the maximum gain in each of the abovementioned frequency spectrums.

Subsequently, the CPU 11 generates parameters conforming to a prescribed standard based on the feature data extracted in step S7 (step S8).

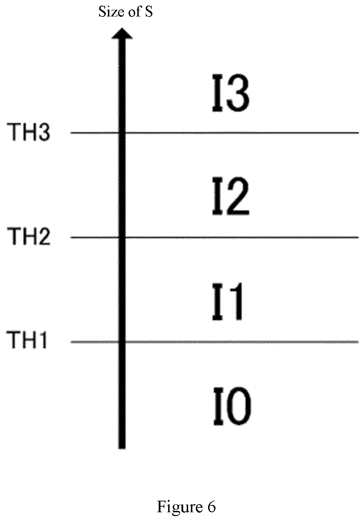

In specific terms, the CPU 11 first converts the area of each section in each frequency spectrum of the front half and latter half of the abovementioned voice data derived in step S7 to any one of integers I0, I1, I2, I3. In more detail, as shown in FIG. 6, when the abovementioned area is less than a first threshold TH1, the CPU 11 converts the area to I0. When the abovementioned area is the first threshold TH1 or greater and less than a second threshold TH2, the area is converted to I1. When the abovementioned area is the second threshold TH2 or greater and less than a third threshold TH3, the area is converted to I2. When the abovementioned area is the third threshold TH3 or greater, that area is converted to I3. For example, if the data of the area of each section of the frequency spectrum of the front half of the voice data is represented by S1 = {S₀, S₁, S₂, S₃}, and the data after conversion to integers is represented by T1 = {T₀, T₁, T₂, T₃}, when S₀ ≥ TH3, TH1 ≤ S₁ < TH2, TH2 ≤ S₂ < TH3, S₃ < TH1, then T1 = {I3, I1, I2, I0}.

Next, the CPU 11 changes the lineup of the data T = {T₀, T₁, T₂, T₃} after converting to the abovementioned integers according to the frequency number F that gives the maximum gain derived in step S7. Here, the rearrangement methods for the lineup of {T₀, T₁, T₂, T₃} includes the 24 rearrangement methods of C [0] = {T₀, T₁, T₂, T₃}, C [1] = {T₀, T₁, T₃, T₂}, C [2] = {T₀, T₂, T₁, T₃}, ..., C [23] = {T₃, T₂, T₁, T₀}, and each of the frequency numbers F is associated with one of the rearrangement methods of C [0] to C [23] in advance. When the array obtained by rearranging the data T after conversion to the abovementioned integers using the rearrangement method according to the abovementioned frequency number F is defined as U, U = {T' [0] , T' [1] , T' [2] , T' [3] }. More specifically, when the array obtained from the frequency spectrum of the front half is defined as U1, U1 = {T1' [0] , T1' [1], T1' [2] , T1' [3] }. When the array obtained from the frequency spectrum of the latter half is defined as U2, U2 = {T2' [0] , T2' [1] , T2' [2] , T2' [3] }. Here, T1 represents data after conversion of the area of each section of the frequency spectrum of the front half to the abovementioned integers, and T1' represents the data after the data after conversion is rearranged using the rearrangement method according to the frequency number F1. T2 represents the data after conversion of the areas of each section of the frequency spectrum of the latter half to the abovementioned integers, and T2' represents the data after the data after conversion is rearranged using the rearrangement method according to frequency number F2. F1 represents the number of the frequency that gives the maximum gain in the frequency spectrum of the front half, and F2 represents the number of the frequency that gives the maximum gain in the frequency spectrum of the latter half.

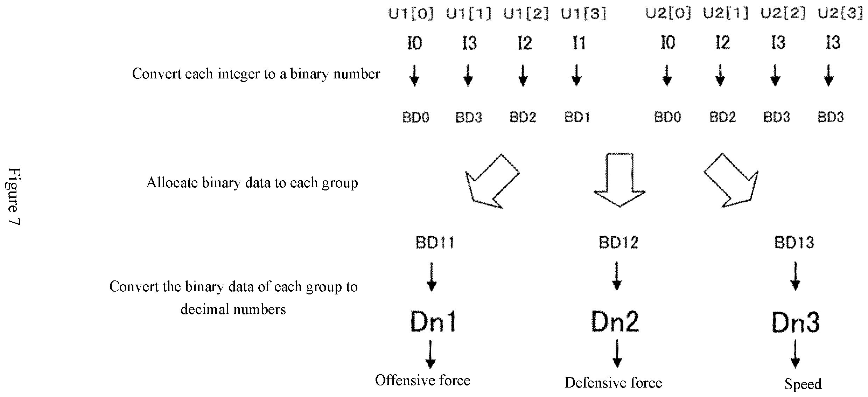

Next, the CPU 11 generates the three parameters of offensive power, defensive power, and speed that are attribute values of the character described above based on the abovementioned arrays U1, U2. For example, as shown in FIG. 7, when U1 = {I0, I3, I2, 111, and U2 = {10, I2, I3, 13} , the CPU 11 converts each integer of the arrays U1, U2 to binary data. The CPU 11 allocates each binary data BD0, BD3, BD2 corresponding to each of U1 [0] , U1 [1] , U1 [2] to a group relating to offensive power, for example. The CPU 11 allocates each binary data BD1, BD0, BD2 corresponding to each of U1 [3] , U2 [0] , U2 [1] to a group relating to defensive power, for example. The CPU 11 allocates each binary data BD3, BD3 corresponding to each of U2 [2] , U2 [3] to a group relating to speed, for example. Then, the CPU 11 generates binary data BD11 constituted by combining each binary data BD0, BD3, BD2 allocated to the group relating to offensive power. Then, the CPU 11 converts the generated binary data BD11 to decimal data Dn1, and generates offensive power parameters based on this data Dn1. The CPU11 generates binary data BD12 constituted by combining each binary data BD1, BD0, BD2 allocated to the group related to defensive power. Then, the CPU 11 converts the generated binary data BD12 to decimal data Dn2, and generates defensive power parameters based on this data Dn2. The CPU 11 generates binary data BD13 constituted by combining each binary data BD3, BD3 allocated to the group related to speed. Then, the CPU 11 converts the generated binary data BD13 to decimal data DN3, and generates defensive power parameters based on this data DN3.

Subsequently, the CPU 11 displays a character generating screen 32 on the display unit 13 (step S9). Then, the CPU 11 ends the character generating process.

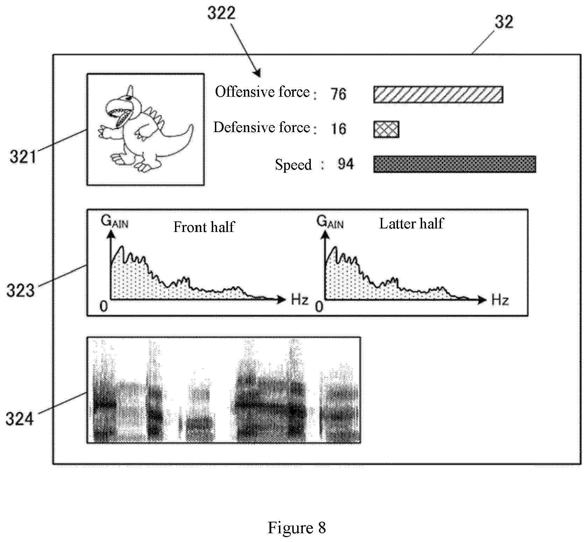

FIG. 8 is a drawing showing an example of the character generating screen 32.

The character generating screen 32 is a prescribed screen before transitioning to the recording mode screen 31, and is a screen in which the characteristics, etc., of the character based on the parameters generated in step S8 are displayed. In specific terms, as shown in FIG. 8, on the character generating screen 32, an image 321 of the character described above is displayed, and parameter data 322 is displayed. The parameter data 322 is data representing each of the three parameters of offensive power, defensive power, and speed as numerical values and bar graphs. On the character generating screen 32, each frequency spectrum 323 of the first half and the latter half obtained from the voice data (waveform data) recorded in the recording process of step S3 is displayed, and a voiceprint 324 that represents the result of frequency analysis of the voice data as a sonagram is displayed.

Returning to the explanation of the character generating process, in step S5, when it is determined that there is no recording of the voice data (recording data) in the RAM of the storage unit 12 (step S5, No), the CPU 11 skips the processes of step S6 to step S9 and ends the character generating process. When it is determined that there is no recording of voice data (recording data) in the RAM of storage unit 12, the normal prescribed screen (not illustrated) before transitioning to the recording mode screen 31 is displayed.

As described above, the CPU 11 of the game device 10 of the present embodiment acquires voice via the voice input unit 15, extracts feature data relating to the voice based on the acquired voice, digitizes the extracted feature data, and sets prescribed character characteristics (offensive power, defensive power, speed) as the game environment based on the digitized feature data.

Therefore, according to the game device 10 of the present embodiment, prescribed character characteristics are set based on featured data relating to the voice that has been digitized, without performing so-called pattern matching, so it is possible to create a character with various characteristics even when the conditions when the voice is input are the same (e.g. same dialogue). With the game device 10 of the present embodiment, because so-called pattern matching is not performed, as long as it is possible to acquire the voice, it is possible to reliably set the prescribed character characteristics whatever the type of voice.

As a result, according to the game device 10, it is possible to enjoy thinking about what kind of person, what kind of voice, and what kind of dialogue is said will make a strong character appear, expanding the play options.

The CPU 11 of the game device 10 of the present embodiment divides the frequency spectrum obtained from the waveform data of the voice acquired via the voice input unit 15 into a plurality of frequency domains, and the area under the spectrum in each divided frequency domain is extracted as feature data.

Therefore, according to the game device 10 of the present embodiment, the area under the spectrum of each frequency domain is extracted as feature data, so it is possible to highlight that feature data. As a result, according to the game device 10, different feature data is extracted according to the words (e.g. "Summon," or "Monster name") said by a certain player, so it is possible to create a unique character according to the words said even by the same player. Even if the same word said by a certain player (e.g. "Summon") is said by a different player, different feature data is extracted, so it is possible to create unique characters for each player. When words said by a certain player are said again by the player, feature data of the same contents is extracted, so it is possible to give reproducibility to character creation.

The CPU 11 of the game device 10 of the present embodiment digitizes feature data by converting the areas under the spectrum of each frequency domain to a prescribed integer corresponding to an applicable predetermined range.

Therefore, according to the game device 10 of the present embodiment, since feature data is digitized by converting the areas under the spectrum of each frequency domain to a prescribed integer corresponding to an applicable predetermined range. it is possible to digitize feature data within a range conforming to a predetermined standard. As a result, according to the game device 10, it is possible to appropriately set prescribed character characteristics.

The CPU 11 of the game device 10 of the present embodiment converts each of the integers of digitized feature data to binary data, allocates each of the converted binary data to a prescribed group among a plurality of groups, generates a plurality of parameters corresponding to each group based on the binary data configured by being allocated to each group, and sets a plurality of characteristics (offensive power, defensive power, speed) of a prescribed character based on the generated plurality of parameters.

Therefore, according to the game device 10 of the present embodiment, a plurality of characteristics of a prescribed character are set based on the plurality of parameters generated from the digitized feature data, so it is possible to create a more unique character.

The CPU 11 of the game device 10 of the present embodiment displays the set plurality of characteristics (offensive power, defensive power, speed) of the prescribed character on the display unit 14.

Therefore, according to the game device 10 of the present embodiment, the set plurality of characteristics of the prescribed character are displayed on the display unit 14, so it is possible to have the player understand the plurality of characteristics of that character.

The CPU 11 of the game device 10 of the present embodiment is capable of changing the lineup of the integers of the digitized feature data, and when the lineup of the integers is changed, converts each of the integers of the feature data to binary data based on the feature data after the lineup of the integers has been changed.

Therefore, according to the game device 10 of the present embodiment, by changing the lineup of the integers of the digitized feature data, it is possible to increase the variation of that feature data, so it is possible to create an even more unique character by setting a plurality of characteristics of a prescribed character based on the plurality of parameters generated from this kind of feature data.

The CPU 11 of the game device 10 of the present embodiment further extracts the frequency that gives the maximum gain in the abovementioned frequency spectrum as the feature data, and changes the lineup of the integers of the feature data based on the array corresponding to the extracted frequency.

Therefore, according to game device 10 of the present embodiment, when the voice acquired via the voice input unit 15 is the same, specifically, when it is the voice when the same word is said by the same player, the lineup of the integers of the feature data is changed based on the same array to each other, so by setting the plurality of characteristics of a prescribed character based on the plurality of parameters generated by this kind of feature data, it is possible to ensure the reproducibility of the character creation.

Above, an embodiment of the present invention was explained, but the present invention is not limited to that embodiment, and it goes without saying that various modifications are possible within a scope that does not depart from the spirit of the invention.

For example, in the abovementioned embodiment, offensive power, defensive power, and speed which are three characteristics of a prescribed character are set as the game environment, but the characteristics are not limited to three, and may also be more than that. The abovementioned characteristics are not limited to being related to attribute values, and may also include the external appearance, etc., of the character. In this case, parameters are generated according to the number of characteristics.

In the abovementioned embodiment, the game device 10 was configured to acquire voice via the voice input unit 15, but, for example, it is also possible to provide a communication unit that is connected in communication to a communication network and that performs communication with devices on the communication network, and that acquires voice from an external device via the communication unit.

In the abovementioned embodiment, each frequency spectrum derived with the front half and latter half of the voice data as the object is divided into four equal parts, and the areas S₀, S₁, S₂, S₃ of each section are derived as feature data, but it is also possible to divide equally into four predetermined frequency domains, and to divide each frequency spectrum in a region from minimum frequency to maximum frequency of each derived frequency spectrum into four equal parts. When deriving the feature data, for example, it is also possible to not divide the voice data into the front half and latter half, and rather to divide the frequency spectrum derived through the overall voice data into eight equal parts, and to derive areas S₀, S₁, ..., S₈ of each section as the feature data.

In the abovementioned embodiment, the lineup of the digitized feature data T = {T₀, T₁, T₂, T₃} was changed, but it is also possible to generate the three parameters of offensive power, defensive power, and speed which are attributes of the character from the feature data T without changing the lineup.

In the abovementioned embodiment, in the character generating process (see FIG. 3), the feature data extracted at step S7 was digitized, and the parameters were generated conforming to a prescribed standard based on the digitized feature data, but, for example, it is also possible to generate the parameters directly from the feature data extracted at step S7 according to a prescribed conversion method without digitizing the feature data.

### Industrial Applicability

The present disclosure can be used in a game device, a game environment setting method and a program.

### Explanation of Codes

10: Game device;
11: CPU;
12: Storage unit;
13: Operating unit;
14: Display unit;
15: Voice input unit;
16: Speaker unit.

## Claims

1. A game device comprising
an acquisition means for acquiring voice,
an extraction means for extracting feature data related to the voice based on voice acquired by the acquisition means, and
a setting means for setting a game environment based on feature data extracted by the extraction means.

2. The game device according to claim 1, wherein comprising
digitization means for digitizing feature data extracted by the extraction means, wherein
the setting means sets a game environment based on the feature data digitized by the digitization means.

3. The game device according to claim 2, wherein
the digitization means digitizes into a plurality of numerical values based on the feature data.

4. The game device according to claim 2 or 3, wherein
the extraction means divides a frequency spectrum obtained from waveform data of voice acquired by the acquisition means into a plurality of frequency domains, and extracts the area under the spectrum in each divided frequency domain as the feature data.

5. The game device according to claim 4, wherein
the digitization means digitizes the feature data by converting the area of each of the frequency domains into a prescribed integer corresponding to an applicable predetermined range corresponding to each of the area.

6. The game device according to claim 5, wherein comprising
a conversion means for converting each integer of the feature data digitized by the digitization means into binary data, and
a generating means for allocating each binary data converted by the conversion means to a pre-specified group among a plurality of groups, and generating a plurality of parameters corresponding to each group based on binary data configured by being allocated to each group, wherein
the setting means sets a plurality of characteristics of a character used in the game as an environment of the game based on a plurality of parameters generated by the generating means.

7. The game device according to claim 6, wherein comprising
a display control means for displaying on a display unit a plurality of characteristics of the character set by the setting means.

8. The game device according to claim 6 or 7, wherein comprising
change means for changing a lineup of the integers of the feature data digitized by the digitization means, wherein
when a lineup of the integers is changed by the change means, the conversion means converts each of the integers of the feature data to binary data based on the feature data after the lineup of the integers has been changed.

9. The game device according to claim 8, wherein
each frequency of the frequency spectrum is associated with an array for changing a lineup of the integers,
the extraction means further extracts the frequency having the maximum gain in the frequency spectrum as the feature data, and
the change means changes a lineup of the integers based on the array corresponding to the frequency extracted by the extraction means.

10. A game environment setting method comprising
an acquisition step for acquiring voice,
an extraction step for extracting feature data related to the voice based on voice acquired in the acquisition step, and
a setting step for setting the game environment based on feature data extracted in the extraction step.

11. A program that
makes a computer function as
an acquisition means for acquiring voice,
an extraction means for extracting feature data related to the voice based on voice acquired by the acquisition means, and
a setting means for setting the game environment based on feature data extracted by the extraction means.
